# EUROPÄISCHE PATENTSCHRIFT

(11) **EP 0 700 548 B1**
(45) Veröffentlichungstag und Bekanntmachung des Hinweises auf die Patenterteilung: **05.11.1997**
(21) Anmeldenummer: 94915047.8
(22) Anmeldetag: 18.05.1994
(51) Int. Cl.: G07B 15/00, G07C 5/08

(54) **DATENLESE- UND -SCHREIBEINRICHTUNG IN EINEM FAHRZEUG**
DATA READING AND WRITING DEVICE FOR A VEHICLE
DISPOSITIF DE LECTURE ET D'ECRITURE DE DONNEES POUR UN VEHICULE

(30) Priorität: 28.05.1993 DE 4318354; 10.11.1993 DE 4339014
(43) Veröffentlichungstag der Anmeldung: 13.03.1996
(73) Patentinhaber: MANNESMANN Aktiengesellschaft, 40213 Düsseldorf (DE)
(72) Erfinder: HERDEG, Wolfgang, D-73479 Ellwangen (DE); WIDL, Andreas, D-81667 München (DE)
(74) Vertreter: Presting, Hans-Joachim, Dipl.-Ing.
(86) Internationale Anmeldenummer: DE9400584
(87) Internationale Veröffentlichungsnummer: WO9428509

(56) Entgegenhaltungen:
- EP-A- 0 425 961
- WO-A-85/01819
- WO-A-90/15401
- DE-A- 2 844 221

## Beschreibung

Die Erfindung betrifft ein fahrzeuginternes Abrechnungsgerät für die Nutzung gebührenpflichtiger Wegstrecken.

Ein derartiges Gerät wird beispielsweise in einem insbesondere zur Autobahngebührenabrechnung geeigenten System benutzt, wie es in der nicht vorveröffentlichten auf die Anmelderin zurückgehenden Patentanmeldung DE-P 43 10 099.6 beschrieben ist. Dieses System umfaßt ein im jeweiligen Fahrzeug mitgeführtes elektronisches Abrechnungsgerät, das fortlaufend von außen gesendtete Daten zur Bestimmung der geographischen Fahrzeugposition empfängt (z.B. Satellitennavigation) und auswertet oder unmittelbar Positionsdaten empfängt (z.B. Funkpeilsystem). Wesentlicher Teil des Abrechnungsgeräts ist eine Speichereinheit, die vorgegebene geographische Positionen (Identifizierungspunkte) gespeichert hat, welche eine eindeutige Charakterisierung der einzelnen gebührenpflichtigen Wegstrecken ermöglichen. Eine Recheneinheit vergleicht jeweils die aktuell ermittelten oder empfangenen Fahrzeugpositionsdaten mit den Positionsdaten der Identifizierungspunkte und kann durch einen Entscheidungsalgoritmus eindeutig emlitteln, ob eine gebührenpflichtige Wegstrecke vom Fahrzeug benutzt wird. Wenn eine gebührenpflichtige Streckennutzung ermittelt wird, nimmt das Gerät mittels einer Datenlese- und -schreibeinrichtung auf einem Speichermedium (z.B. Chip-Karte) eine entsprechende Verbuchung vor, indem von einem in dem Speichermedium eingetragenen Gebührenguthaben der jeweilige Streckentarif abgezogen wird.

Dieses System zur fahrzeuginternen Nutzungsabrechnung gewährleistet einen optimalen Datenschutz, da die Buchungsvorgänge und die Erfassung der geographischen Fahrzeugposition nur im Fahrzeug selbst stattfinden. Es erfolgt keine exteme Erfssung und Registrierung der von einem Fahrzeug zurückgelegten gebührenpflichtigen Wegstrecken, da keine Informationen über die Fahrstrecken und die Nutzungskosten das Fahrzeug verlassen.

Eine "maschinelle" Kontrolle darüber, wie, wann und wo das z.B. über einen Automaten gekaufte Gebührenguthaben vom Fahrer verwendet wird, findet nicht statt.

Im Grundsatz wäre es möglich, dieses System mißbräuchlich zu nutzen, indem während einer gebührenpflichtigen Wegstreckennutzung die Chip-Karte gar nicht oder nur zeitweilig in die Einrichtung eingeführt wird, so daß eine der Nutzung entsprechende Gebührenabbuchung nicht oder nur zu einem Teil erfolgt. Im Falle einer Verkehrskontrolle könnte ohne weiteres die Chip-Karte "rechtzeitig" in die Einrichtung eingeführt und so ein ordnungsgemäßer Betrieb des Abbuchungsgerätes vorgetäuscht werden.

Aus der EP-A-0 425 961 ist ein Verfahren und eine Einrichtung zur fahrzeuginternen elektronischen Abrechnung der Nutzung gebührenpflichtiger Wegstrecken bekannt. Es handelt sich dabei um eine automatisches Abbuchungssystem, das auf der Installation einer umfangreichen Infrastruktur innerhalb des gebührenpflichtigen Straßennetzes basiert, d.h. alle Ein- und Ausfahrtstellen müssen mit einer aufwendigen Gerätetechnik ausgerüstet sein. Das Fahrzeug selbst weist eine drahtlose Empfangseinrichtung auf, deren empfangene Informationen zur Identifizierung gebührenpflichtiger Wegstrecken von einer Recheneinrichtung ausgewertet werden, um die automatische Abbuchung der anfallenden Nutzungsgebühren von einer Speichereinrichtung (Wertspeicherkarte) zu veranlassen. Ein Abbuchungsvorgang erfolgt jeweils beim Passieren einer straßenseitigen Sendestation. Da das Abbuchungsgerät mit Sende- und Empfangseinrichtungen ausgestattet ist, kann es seine ordnungsgemäße Funktion durch eine entsprechende Signalaussendung quittieren. Ein Fahrzeug mit einem nicht funktionsfähigen Abrechnungsgerät bzw. einem unzureichenden Wertguthaben kann daher automatisch erkannt und gegebenenfalls verfolgt werden.

Der DE-A-28 44 221 ist eine Einrichtung zur fahrzeuginternen Nutzungsabrechnung (Parkscheibe) zu entnehmen, die automatisch aktivierbar ist, und zwar in Abhängigkeit von Sensordaten, die den Betriebszustand des Fahrzeugs angeben, z.B. Öffnen und Schließen der Fahrertür oder Betätigung des Zündschlüssels).
In WO-A-85/01819 wird die Erfassung von in einem Mikroprozessorsystem zu speichernden und auszuwertenden fahrzeugbezogenen Daten (Geschwindigkeit, Drehzahl, Kraftstoffverbrauch) beschrieben, wobei vorgeschlagen wird, die Datenkarte, d.h. das Speichermedium unter bestimmten Umständen im Gerät z.B. mittels eines elektromagnetisch betätigten Riegels festzuhalten.

Aus der WO-A-90/15401 ist ein fahrzeuginternes System bekannt, mit dem gewisse Wegenutzungsgebühren abgerechnet werden sollen. Die Gebührenermittlung erfolgt in Abhängigkeit von der aktuellen Verkehrsdichte und nicht von der jeweils benutzten Straße. Um eine Inbetriebnahme des Fahrzeugs immer dann zu verhindern, wenn sich keine gültige Kreditkarte in der Gebührenabbuchungseinrichtung befindet und der Kredit nicht ausgeglichen ist, wird das Fahrzeug z.B. durch Unterbrechnung der Treibstoffzufuhr stillgesetzt.

Aufgabe der Erfindung ist es, ein Abrechnungsgerät der in Rede stehenden Art dahingehend zu verbessern, daß unzulässige Manipulationen mit der Chip-Karte o.dgl. praktisch ausgeschlossen werden können.

Gelöst wird diese Aufgabe mit den Merkmalen des Patentanspruchs 1. Vorteilhafte Weiterbildungen der Erfindung sind in den Unteransprüchen 2 bis 8 angegeben.

Der Grundgedanke der Erfindung liegt darin, daß einerseits die Möglichkeit einer Verriegelung (Sperrvorrichtung) der Zuführung und des Herausnehmens des beweglichen Speichermediums auf seiten der Einrichtung geschaffen wird und das andererseits diese Verriegelung dann aktiviert wird und bleibt, wenn Betriebszustände vorliegen, während deren keine Zustandsveränderungen in der Zuführung des Speichermediums erlaubt sind. Zu diesem Zweck ist die Einrichtung mit mindestens einem Sensor gekoppelt, der zur Feststellung des Betriebszustandes des Fahrzeugs und/oder einer mit dem Fahrzeug verbundenen Vorrichtung (z.B. Autobahngebührenabrechnungsgerät) dient. Weiterhin ist im Bereich der Zuführung des Speichermediums eine maschinell betätigbare Sperrvorrichtung angeordnet, die bei Aktivierung die Zuführung eines Speichermediums oder das Herausnehmen eines bereits eingeführten Speichermediums verhindert. Die Entscheidung über die Aktivierung oder Deaktivierung dieser Sperrvorrichtung wird automatisch aufgrund der Daten getroffen, die der oder die Sensoren liefern. Als Sensoren kommen vorzugsweise solche in Frage, die den Zustand der Zündung des Fahrzeugmotors (eingeschaltet oder ausgeschaltet) und/oder den Zustand der Fahrzeugräder (drehend oder stillstehend), den Zustand der Fahrzeugtüren (offenoder geschlossen) signalisieren. Als Datenlese- und - schreibeinrichtung selbst kommt in erster Linie ein Chip-Karten-Leser in Frage. Die aktivierbare Sperrvorrichtung kann beispielsweise als mechanische Sperre ausgebildet sein, die im Verriegelungsfall in eine entsprechende Lücke im Korpus des Speichermediums eingreift und dieses festhält. Wenn das eingeführte Speichermedium noch aus der Zuführung (Leseschlitz) herausragt, könnten im Zweifelsfall Versuche gemacht werden, das Speichermedium trotz Sperre gewaltsam herauszuziehen unter Inkaufnahme von Beschädigungen am Speichermedium und auch an der Einrichtung selbst. Besonders bevorzugt ist daher eine Ausführungsform der Erfindung, bei der das Speichermedium im Betriebsfall vollständig in die Einrichtung eingezogen wird und somit von außen nicht mehr sichtbar und nicht mehr manuell greifbar ist. Eine Freigabe des Speichermediums ist dabei nur durch eine maschinelle Auswerfvorrichtung möglich, die erst dann aktivierbar ist, wenn ein entsprechend erlaubter Betriebszustand vorliegt. Ein unerlaubtes Einführen des Speichermediums kann einfach durch VerschlieBen des Einführschlitzes der Einrichtung verhindert werden. Diese Form der Sperrvorrichtung kann selbstverständlich auch mit der zuvor erwähnten in das Speichermedium eingreifenden mechanischen Sperre kombiniert werden.

Ein bevorzugtes Rnwendungsgebiet der erfindungsgemäßen Einrichtung ist ein fahrzeuginternes Autobahngebührenabrechnungssystem der eingangs bereits beschriebenen Art, das an dem nachfolgenden Rusführungsbeispiel noch näher erläutert wird.

Bei einem Abbuchungsgerät eines fahrzeuginternen Autobahngebührenabrechnungssystems wird eine Chip-Karte zur Speicherung eines vom Nutzer erworbenen Gebührenguthabens benutzt. Die während der Rutobahnbenutzung für die einzelnen befahrenen Teilstrecken fälligen Benutzungsgebühren werden sukzessive von diesem Gebührenguthaben abgebucht. Hierzu ist das im Fahrzeug mitgeführte Rbbuchungsgerät mit einem Chip-Karten-Lese/Schreibgerät (Einrichtung) ausgerüstet. Die Einrichtung ist dergestalt ausgebildet, daß eine eingeführte Chip-Karte vollständig eingezogen wird und während des Befahrens der gebührenpflichtigen Autobahn (d.h. es finden laufende Abbuchungen statt) nicht mehr freigegeben wird, solange wie das Fahrzeug nicht stillsteht, der Motor abgeschaltet und die Fahrertür nicht geöffnet ist. Zur Feststellung dieser Betriebsbedingungen sind entsprechende Sensoren im Fahrzeug eingebaut und mit der Einrichtung bzw. (indirekt) mit einer diese beeinflussenden Überwachungsvorrichtung verbunden. Wenn keine Chip-Karte eingeführt war, ist unter denselben Bedingungen der Leseschlitz der Einrichtung gesperrt. Dadurch ist sichergestellt, daß im Falle einer Verkehrskontrolle zur überprüfung des ordnungsgemäßen Betriebs des Abbuchungsgeräts weder bei unterlassener Einführung einer Chip-Karte eine solche noch unbemerkt nachträglich eingeführt werden kann, noch bei Benutzung einer bereits entwerteten Chip-Karte diese gegen eine gültige mit ausreichendem Gebührenguthaben ausgetauscht werden kann. Es ist auch nicht möglich, während einer Autobahnfahrt auf einer gebührenpflichtigen Teilstrecke die Chip-Karte vorübergehend herauszunehmen, um einen Teil der Gebühren "einzusparen". Sobald die gebührenpflichtige Autobahnzone verlassen wird, kann die Chip-Karte automatisch oder auf Anforderung maschinell ausgeworfen werden. Im Bereich der gebührenpflichtigen Rutobahn ist das Einführen oder Herausnehmen der Chip-Karte nur dann möglich, wenn der Fahrzeugmotor abgestellt ist, das Fahrzeug steht und die Fahrertür geöffnet ist. Hierdurch kann im Falle der Verkehrskontrolle eine unzulässige Manipulation relativ leicht festgestellt werden. Rndererseits muß ein Einführen oder Herausnehmen der Chip-Karte z.B. während eines Rufenthalts in einer Rutobahnraststätte auf jeden Fall möglich sein. Dies ist insbesondere schon deswegen erforderlich, weil dem Nutzer Gelegenheit geboten werden muß, auch während einer Rutobahnbenutzung ein etwa unzureichendes Gebührenguthaben durch Zukauf neuer Einheiten soweit nötig wieder aufzufüllen.

Durch die erfindungsgemäße Lösung ist dem Nutzer einer gebührenpflichtigen Autobahnteilstrecke während der Fahrt jeglicher Einfluß darauf genommen, den Zustand zu verändern, ob die Chip-Karte steckt oder abgezogen ist. Sein Risiko, bei einer entsprechenden Verkehrskontrolle als mißbräuchlicher Nutzer im Falle eines nicht ordnungsgemäßen Betriebs seines Abbuchungsgeräts entdeckt zu werden, vergrößert sich ganz erheblich, so daß die erfindungsgemäße Einrichtung als wirksamer Schutz für diesbezüglichen Mißbrauch angesehen werden kann. Der maschinelle Aufwand hierfür ist sehr gering, zumal die erforderlichen Sensoren äußerst einfach aufgebaut sein können und zum Teil sogar von vornherein in jedem Fahrzeug vorhanden sind (z.B. Möglichkeit der Kopplung der Einrichtung mit dem Zündschloß und den Türkontakten).

## Patentansprüche

1. Fahrzeuginternes Abrechnungsgerät für die Nutzung gebührenpflichtiger Wegstrecken eines Wegstreckennetzes mit einer Recheneinheit, die durch Vergleich der mittels eines Satellitennavigationssystems oder Funkpeilsystems ermittelten aktuellen geografischen Fahrzeugpositionsdaten mit vorgegebenen, die einzelnen gebührenpflichtigen Wegstrecken eindeutig charakterisierenden geografischen Positionen anhand eines Entscheidungsalgorithmus eine gebührenpflichtige Streckennutzung ermittelt, und mit einer Datenlese- und -schreibeinrichtung (Einrichtung) für das Lesen und Schreiben eines frei beweglichen Speichermediums, auf dem jeweils eine dem jeweiligen Streckentarif entsprechende Verbuchung der Streckennutzung erfolgt, wobei die Einrichtung mit mindestens einem Sensor zur Feststellung des Betriebszustandes des Fahrzeugs gekoppelt, ferner eine Sperrvorrichtung in der Zuführung für das Speichermedium vorgesehen und das Speichermedium durch Aktivierung oder Deaktivierung der Sperrvorrichtung nur in Abhängigkeit vom Vorliegen eines oder mehrerer bestimmter Betriebszustände des Fahrzeugs in die Einrichtung einführbar oder aus ihr herausnehmbar ist.

2. Abrechnungsgerät nach Anspruch 1,
dadurch gekennzeichnet,
daß die Einrichtung eine Chip-Karten-Lese/Schreibeinrichtung ist.

3. Abrechnungsgerät nach einem der Ansprüche 1 bis 2,
dadurch gekennzeichnet,
daß die Einrichtung mit einem Sensor zur Erfassung der Einschaltung der Zündung gekoppelt ist.

4. Abrechnungsgerät nach einem der Ansprüche 1 bis 3,
dadurch gekennzeichnet,
daß die Einrichtung mit einem Sensor zur Erfassung des Schließzustandes der Fahrzeugtür gekoppelt ist.

5. Abrechnungsgerät nach einem der Ansprüche 1 bis 4,
dadurch gekennzeichnet,
daß die Einrichtung mit einem Sensor zur Erfassung der Drehung der Fahrzeugräder gekoppelt ist.

6. Abrechnungsgerät nach einem der Ansprüche 1 bis 5,
dadurch gekennzeichnet,
daß die Einrichtung mit einem Sensor zur Erfassung des Betriebszustandes des Fahrzeugmotors gekoppelt ist.

7. Abrechnungsgerät nach einem der Ansprüche 1 bis 6,
dadurch gekennzeichnet,
daß das Speichermedium im eingeführten Zustand vollständig in den Leseschlitz der Einrichtung eingezogen ist.

8. Abrechnungsgerät nach einem der Ansprüche 1 bis 7,
dadurch gekennzeichnet,
daß die Sperrvorrichtung als in das eingeführte Speichermedium eingreifende mechanische Sperre ausgebildet ist.

## Claims

1. Charge settlement instrument inside a vehicle for the utilisation of toll routes of a route network, with a calculating unit which, by comparing the actual geographical vehicle position data determined by means of a satellite navigation system or radio direction finding system with predetermined geographical positions clearly characterising the individual toll routes, determines a route utilisation which is subject to a toll on the basis of a decision algorithm, and with a data read-write device (device) for reading from and writing to a freely mobile storage medium on which each route utilisation is logged in accordance with the respective route tariff, wherein the device is coupled to at least one sensor for detecting the operating state of the vehicle, a blocking device is provided in the lead-in for the storage medium, and the storage medium can only be inserted in the device or removed from the latter in accordance with the existence of one or more certain operating states of the vehicle by activating or deactivating the blocking device.

2. Charge settlement instrument according to claim 1, characterised in that the device is a chip card read/write device.

3. Charge settlement instrument according to one of claims 1 and 2, characterised in that the device is coupled to a sensor for detecting when the ignition is turned on.

4. Charge settlement instrument according to one of claims 1 to 3, characterised in that the device is coupled to a sensor for detecting when the vehicle door is in the closed state.

5. Charge settlement instrument according to one of claims 1 to 4, characterised in that the device is coupled to a sensor for detecting the rotation of the vehicle wheels.

6. Charge settlement instrument according to one of claims 1 to 5, characterised in that the device is coupled to a sensor for detecting the operating state of the vehicle engine.

7. Charge settlement instrument according to one of claims 1 to 6, characterised in that the storage medium is drawn completely into the read slot of the device in the inserted state.

8. Charge settlement instrument according to one of claims 1 to 7, characterised in that the blocking device is formed as a mechanical block which engages in the inserted storage medium.

## Revendications

1. Appareil de décompte interne à un véhicule pour l'usage de tronçons à péage d'un réseau de tronçons, comportant une unité de calcul qui détermine, par la comparaison des données de position du véhicule, géographiques actuelles déterminées au moyen d'un système de navigation par satellite ou d'un système radiogoniométrique et de positions géographiques prédéfinies caractérisant de façon univoque les tronçons à péage individuels, au moyen d'un algorithme de décision, un usage de tronçons à péage, et un dispositif de lecture et d'écriture de données (dispositif) pour la lecture et l'écriture d'un moyen de stockage pouvant se déplacer librement, sur lequel on réalise à chaque fois une comptabilisation correspondant au tarif du trajet correspondant, de l'usage du trajet, le dispositif étant couplé au moins à un capteur pour déterminer l'état de fonctionnement du véhicule, un dispositif de blocage étant en outre prévu dans l'alimentation du moyen de stockage, et le moyen de stockage pouvant être entré ou sorti du dispositif par l'activation et la désactivation du dispositif de blocage, uniquement en fonction de la présence d'un ou de plusieurs états de fonctionnement déterminés du véhicule.

2. Appareil de décompte selon la revendication 1,
caractérisé en ce que le dispositif est un dispositif de lecture et d'écriture à carte à puce.

3. Appareil de décompte selon l'une des revendications 1 ou 2,
caractérisé en ce que le dispositif est couplé à un capteur pour détecter l'allumage.

4. Appareil de décompte selon l'une des revendications 1 à 3,
caractérisé en ce que le dispositif est couplé à un capteur pour détecter l'état de fermeture de la porte du véhicule.

5. Appareil de décompte selon l'une des revendications 1 à 4,
caractérisé en ce que le dispositif est couplé à un capteur pour déterminer la rotation des roues du véhicule.

6. Appareil de décompte selon l'une des revendications 1 à 5,
caractérisé en ce que le dispositif est couplé à un capteur pour détecter l'état de fonctionnement du moteur du véhicule.

7. Appareil de décompte selon l'une des revendications 1 à 6,
caractérisé en ce que le moyen de stockage est introduit complètement dans la fente de lecture du dispositif, dans l'état entré.

8. Appareil de décompte selon l'une des revendications 1 à 7,
caractérisé en ce que le dispositif de blocage est réalisé sous forme d'un arrêt mécanique agissant dans le moyen de stockage entré.
